# EUROPÄISCHE PATENTANMELDUNG

(11) **EP 3 410 572 A1**
(43) Veröffentlichungstag der Anmeldung: **05.12.2018**
(21) Anmeldenummer: 18170308.3
(22) Anmeldetag: 02.05.2018
(51) Int. Cl.: H02K 1/27, H02K 11/215, H02K 1/30, H02K 15/12, H02K 11/02, H02K 11/01

(54) **ROTOR MIT SENSORMAGNET SOWIE DESSEN HERSTELLUNGSVERFAHREN**

(30) Priorität: 30.05.2017 DE 102017111798
(71) Anmelder: Bühler Motor GmbH, 90459 Nürnberg (DE)
(72) Erfinder: AHRENS, Matthias, 90455 Nürnberg (DE); SCHEER, Arnold, 04275 Leipzig (DE); BÖHM, Karl-Heinz, 91090 Effeltrich (DE); HETTYCH, Reiner, 90471 Nürnberg (DE); BERNREUTHER, Georg, 90449 Nürnberg (DE)

(57) **Zusammenfassung**

Die Erfindung betrifft einen Rotor für einen bürstenlosen Gleichstrommotor mit einem Rotormagneten und einem Sensormagneten für die Positionserfassung des Rotormagneten bereitgestellt. Um Kosten zu sparen und die Herstellung zu vereinfachen, weist der Rotor zusätzlich ein eingespritztes Füll-/Verbindungselement auf, das den Rotormagneten und den Sensormagneten miteinander fest verbindet. Das Füll-/Verbindungselement ist des Weiteren durch eine Formschlusskontur zum orientierten und verdrehsicheren Verbinden mit dem Sensormagneten gekennzeichnet. Des Weiteren stellt die Erfindung ein Verfahren zur Herstellung eines Rotors für einen bürstenlosen Gleichstrommotor bereit.

## Beschreibung

Die Erfindung betrifft einen Rotor für einen Drehstrommotor, insbesondere für einen Synchron-Drehstrommotor oder einen bürstenlosen Gleichstrommotor. Hierbei weist der Rotor einen Rotormagneten als durch ein Magnetfeld antreibbaren Rotationskörper und einen Sensormagneten für die Positions- bzw. Stellungserfassung des Rotormagneten auf. Des Weiteren betrifft die Erfindung ein Verfahren zur Herstellung des zuvor genannten Rotors, insbesondere für einen bürstenlosen Gleichstrommotor.

In der Industrie finden Drehstrommotoren, die unter den Begriff "Elektromotoren" fallen, zahlreiche und unterschiedliche Einsatzmöglichkeiten, beispielsweise als Antriebe für Fahrzeuge, Schiffe, Züge und Flugzeuge. Derartige Motoren bilden zu den bekannten Verbrennungsmotoren, wie z.B. Ottomotor oder Dieselmotor, eine effizientere und umweltfreundlichere Alternative, da sie einen hohen Wirkungsgrad bei der Umwandlung von elektrischer Energie in mechanische Bewegung, insbesondere Rotationsbewegung, haben und keine Emissionen wie beispielsweise Verbrennungsabgase abgeben. Drehstrommotoren werden nicht nur in den zuvor genannten Fortbewegungsmitteln eingesetzt, sondern auch in großer Zahl in Verarbeitungsmaschinen, Robotern, Haushaltsgeräten, Elektronikgeräten (beispielsweise Festplatten und CD-Spielern), Werkzeugen und Spielzeugen verwendet. Dabei kann die Dimension bzw. Größe des Drehstrommotors abhängig von seiner Verwendung zwischen wenigen Millimetern und einigen Metern variieren.

Ein Drehstrommotor wird grundsätzlich durch einen Stator und einen Rotor gebildet, wobei der Stator der feststehende Teil und der Rotor der sich bewegende bzw. rotierende Teil des Elektromotors ist. Hierbei wird der Drehstrommotor mit einem Wechselstrom, insbesondere mit einem Dreiphasenwechselstrom bzw. "Drehstrom", betrieben. Dieser Drehstrom ist durch drei periodisch wechselnde Spannungen gekennzeichnet, die voneinander getrennt geführt werden, die gleiche Frequenz aufweisen und deren zeitliche Abläufe gegenüber den anderen beiden Spannungen um jeweils 120° vor- bzw. nachlaufend versetzt sind.

In einem Stator sind beispielsweise drei Elektromagnet-Spulen (oder - Spulenpaare) mit Leiterwicklungen ausgebildet und stern- bzw. strahlenförmig auf einer Ebene senkrecht zu und um eine Rotationsachse des Drehstrommotors angeordnet, wobei jede Spule zu den beiden benachbarten Spulen, wie beim Drehstrom, jeweils einen Winkel von ±120° aufweist. Sobald jede Spule aus dieser Anordnung mit einer eigenen Spannung aus dem Drehstrom versorgt wird, bildet sich ein Magnetfeld mit magnetischem Nord- und Südpol. Aufgrund der zeitlichen Änderungen der Spannungen des Drehstroms rotiert das erzeugte Magnetfeld auf der Ebene der Spulen und, je nach Anordnung oder elektrischer Speisung der Spulen, im oder gegen den Uhrzeigersinn. Die Rotationsbewegung ist hierbei abhängig von der Frequenz der Spannungen des Drehstroms, d.h. je höher die Frequenz ist, desto schneller ist die Rotationsbewegung des Magnetfelds.

Der Rotor eines Drehstrommotors liegt auf dessen Rotationsachse zwischen den Elektromagneten und ist im Wesentlichen achsensymmetrisch zu der Rotationsachse ausgeformt. Dabei darf/sollte der Rotor keine Unwucht aufweisen, um eine gleichmäßige Rotationsbewegung ausführen zu können und einen unnötigen Verschleiß beim Rotieren um die Rotationsachse zu vermeiden. Der Rotor weist einen magnetischen oder magnetisierbaren Körper auf, beispielsweise einen oder mehrere Permanentmagneten und/oder ferromagnetische/n Körper z.B. mit/aus Eisen. Aufgrund des Rotationsfreiheitsgrads des Rotors wird sich der Rotor wegen seines eigenen Magnetfelds nach dem erzeugten Magnetfeld der Elektromagneten richten und synchron mit diesem äußeren Magnetfeld mitrotieren; daher der Begriff "Synchron-Drehstrommotor".

Bürstenlose Gleichstrommotoren, auch unter den Begriffen "Brushless DC Motor", abgekürzt BLDC- oder BL-Motor, sowie "electronically commutated Motor", kurz EC-Motor, bekannt, sind im Wesentlich wie Synchron-Drehstrommotoren aufgebaut und weisen einen Stator mit Spulen und einen Rotor mit einem oder mehreren Permanentmagnete auf. Daher ist der Begriff "Bürstenloser Gleichstrommotor", wie einem Fachmann bewusst, auf den ersten Blick irreführend. Die Spulen des Stators werden durch eine elektronische Schaltung zeitlich versetzt angesteuert, auch als Kommutierung bezeichnet, um ein drehendes Magnetfeld bzw. Drehfeld zu erzeugen. Dadurch wird der Rotor in Rotation versetzt. Um Drehmomentschwankungen zu minimieren, hat der BLDC-Motor die Möglichkeit, eine Vielzahl von Spulen (beispielsweise 3 oder mehr, insbesondere 8, 12, 16 oder ein Vielfaches von 4) und höchstens eine gleiche Anzahl von Treibersignalen, d.h. ein eigenes Spannungssignal für jede Spule, zu verwenden.

Um die Ansteuerung bzw. Kommutierung der Spulen eines BLDC-Motors von der Rotorposition, der Rotordrehzahl und dem Drehmoment abhängig zu machen und im Gegenzug diese Eigenschaften durch die Kommutierung zu steuern, besteht die Notwendigkeit, die Rotorstellung und die Rotorbewegung zu erfassen bzw. zu messen. Diese Messung kann durch einen am Rotor angeordneten Sensor (beispielsweise ein Hall-Sensor) erfolgen und für eine sogenannte "sensorgesteuerte Kommutierung" verwendet werden. Alternativ oder zusätzlich kann die durch die an den Spulen vorbeibewegten Permanentmagneten induzierte Spannung gemessen werden und für eine sogenannte "sensorlose Kommutierung" verwendet werden.

Bei der sensorgesteuerten Kommutierung kann die Polarität der Permanentmagneten des Rotors (auch Rotormagneten genannt) gemessen werden, die durch das Drehfeld angetrieben werden; allerdings ist diese Messmöglichkeit ungenau. Daher wird der Rotor zusätzlich mit einem Sensormagneten ausgebildet, der auf Grund seiner Dimensionierung, Anordnung und seiner gegenüber dem Rotormagneten höheren Anzahl an Permanentmagneten eine genauere Messung zulässt. Da der Sensormagnet meist als separates Bauteil mit dem Rotormagneten verbunden bzw. befestigt wird, ist eine stabile Befestigung und genaue Ausrichtung wichtig.

Bekannterweise wird der Sensormagnet mittels Klebemittel mit dem Rotormagnet verbunden, wobei auf die Ausrichtung geachtet wird. Allerdings kann es hierbei zu Fehlern kommen, da unter Umständen die unterschiedlich gepolten Magnete nicht visuell erkennbar sind. Außerdem kann ein Klebemittel mit der Zeit seine Eigenschaften und somit Funktion verlieren und ist daher kein beständiges Befestigungsmittel. Eine weitere Möglichkeit, die Magnete zu verbinden, besteht im Löten oder in einem anderen Verfahren, das Hitze verwendet. Jedoch sind derartige Verfahren schädlich für die Magnete und können gar die magnetische Polarisierung stören bzw. zerstören.

Es ist somit die Aufgabe der vorliegenden Erfindung, die zuvor genannten Probleme zu überwinden; insbesondere soll hierzu ein Rotor bereitgestellt werden, bei dem die Ausrichtung von Rotormagnet und Sensormagnet keine Fehlstellung aufweist, die zu Messfehlern führt. Ebenso soll die Verbindung von Rotormagnet und Sensormagnet stabil und zuverlässig sein. Daher wird eine technische Lösung gesucht, einen Magnetgeber bzw. Sensormagneten orientiert, verlier- und verdrehsicher radial zu einer Welle, insbesondere zu einem Rotormagneten, anzubringen.

Diese Aufgabe wird erfindungsgemäß durch einen Rotor gemäß Patentanspruch 1 gelöst.

Hierzu wird ein Rotor für einen bürstenlosen Gleichstrommotor mit einem Rotormagneten und einem Sensormagneten für die Positionserfassung des Rotormagneten bereitgestellt. Zusätzlich weist der Rotor ein eingespritztes Füll-/Verbindungselement auf, das den Rotormagneten und den Sensormagneten miteinander fest verbindet. Das Füll-/Verbindungselement ist des Weiteren durch eine Formschlusskontur zum orientierten und verdrehsicheren Verbinden mit dem Sensormagneten gekennzeichnet.

Das Füll-/Verbindungselement ist kostengünstig und prozesstechnisch einfach herstellbar. Hierbei passt es sich beim Einspritzen insbesondere an die Form des Rotormagneten an und bildet mit dem Rotormagneten eine feste und verdrehsichere Verbindung.

Die Formschlusskontur wird vorzugsweise durch ein Formwerkzeug beim Einspritzen gebildet und ist derart gestaltet, dass der Sensormagnet nur in einer vorbestimmten bzw. orientierten Stellung mit dem Füll-/Verbindungselement verbunden werden kann. Dadurch muss der Sensormagnet, bis auf das Aufsetzen auf die Formschlusskontur, nicht mehr manuell ausgerichtet werden.

Des Weiteren ist die Verbindung zwischen dem Füll-/Verbindungselement und dem Sensormagneten verdrehsicher, wodurch die Anordnung und die Ausrichtung des Sensormagneten im Rotor stabil und unveränderlich ist.

Vorzugsweise ist die Formschlusskontur des Füll-/Verbindungselements auf den Rotormagneten ausgerichtet. Dadurch ergibt sich der Vorteil, dass schlussendlich der Sensormagnet auf den Rotormagneten ausgerichtet ist und somit durch die vorbestimmte Stellung bzw. Anordnung von dem Sensormagneten zum Rotormagneten eine genaue Positionserfassung des Rotormagneten mittels des Sensormagneten möglich ist.

Ebenso kann der Rotor vorteilhafterweise mit einer Welle fest verbunden und/oder geeignet sein, eine Welle entlang einer Achse des Rotors aufzunehmen. Hierbei kann die Drehbewegung des Rotors im Elektromotor auf die Welle übertragen werden und ein anwendungsspezifisches Element wie z.B. ein Rad angetrieben werden. Des Weiteren besteht die Möglichkeit, die Welle während des oder nach dem Fertigungsprozess des Rotors in diesen einzusetzen.

Des Weiteren ist vorzugsweise ein Abschirmungselement, insbesondere ein Rückschlussring, zur Verstärkung eines Sensormagnetfelds des Sensormagneten und/oder zur Abschirmung des Sensormagnetfelds von einem Rotormagnetfeld des Rotormagneten zwischen dem Rotormagnet und dem Sensormagnet angeordnet. Dadurch kann der Sensormagnet sehr nah an den Rotormagneten angeordnet werden; insbesondere existieren vorteilhafte Ausführungsformen, in denen das Abschirmungselement an dem Rotormagneten anliegt bzw. diesen berührt und direkt auf dem Abschirmungselement wiederum der Sensormagnet ausgebildet ist.

In einer bevorzugten Ausgestaltung der Erfindung weist die Formschlusskontur des Füll-/Verbindungselements mindestens eine Nase auf, wobei der Sensormagnet eine mit der Nase verbundene Aufnahme aufweist. Alternative oder zusätzliche Formen der Formschlusskontur wie z.B. Stifte, Federn (für eine Nut-Feder-Verbindung) oder ähnliche sind möglich. Hierbei hat es sich als Vorteil herausgestellt, dass die Formschlusskontur derart geformt ist, dass die Kontur in den Sensormagnet und insbesondere durch diesen einsetzbar ist und zur Fixierung des Sensormagneten verformbar ist. Des Weiteren ist die Formschlusskontur vorteilhafterweise asymmetrisch ausgebildet, damit der Sensormagnet nur in einer bestimmten Stellung mit dem Füll-/Verbindungselement verbunden werden kann.

Vorzugsweise ist das Füll-/Verbindungselement zumindest teilweise oder vollständig unter und/oder um den Rotormagneten gespritzt oder ausgebildet. Aufgrund dessen bildet das Füll-/Verbindungselement eine stabile Verbindung mit dem Rotormagneten.

In einer weiteren vorteilhaften Ausgestaltung ist das Füll-/Verbindungselement fest und verdrehsicher mit dem Rotormagneten ausgebildet bzw. angeordnet. Dies kann z.B. beim Einspritzen des Füll-/Verbindungsstoffs geschehen, wobei beim Aushärten des Stoffs dieser sich ausdehnt, eine Kraft gegen die Innenmantelfläche des Rotormagneten ausübt und somit eine kraft-/formschlüssige Verbindung mit dem Rotormagneten eingeht. Eine alternative oder zusätzliche Möglichkeit besteht darin, dass der Rotormagnet selbst eine Formschlusskontur aufweist, wodurch das Füll-/Verbindungselement verdrehsicher in dem Rotormagneten ausgebildet wird.

Die Erfindung stellt ebenfalls Verfahren zur Herstellung eines Rotors für einen bürstenlosen Gleichstrommotor, insbesondere eines erfindungsgemäßen Rotors, bereit. Hierbei ist das Verfahren durch folgenden Schritte gekennzeichnet:
- Herstellen oder Bereitstellen eines Rotormagneten und eines Sensormagneten;
- zumindest teilweises Unter- oder Umspritzen des Rotormagneten mit einem Füll- oder Verbindungswerkstoff zur Bildung eines eingespritzten Füll-/Verbindungselements, wobei das Füll-/ Verbindungselement eine Formschlusskontur zum orientierten und verdrehsicheren Verbinden mit dem Sensormagneten aufweist;
- Axiales Zusammenführen des Rotormagneten und des Sensormagneten, wobei der Sensormagnet mit der Formschlusskontur des Füll-/Verbindungselements verbunden wird und in Wirkeingriff tritt;
- Fixieren des Sensormagneten mit der Formschlusskontur des Füll-/Verbindungselements.

Aufgrund der geringen Anzahl von Prozessschritten ist die Herstellung eines Rotors im Vergleich zu bekannten Verfahren kostengünstiger.

Vorzugsweise wird der Unter- oder Umspritzungsschritt derart ausgeführt, dass die Formschlusskontur des Füll-/Verbindungselements auf den Rotormagnet ausgerichtet ist, wenn der Rotormagnet zum Unter- oder Umspritzungsschritt aufmagnetisiert ist. Damit wird sichergestellt, dass die Formschlusskontur auf die magnetischen Pole des Rotormagneten ausgerichtet ist und somit Rückschluss auf die Stellung des Rotormagneten geben kann. Hierbei kann der Rotormagnet mit einer Formschlusskontur ausgebildet sein, um den Rotormagnet in einer vorbestimmten Stellung in ein Formspritzwerkzeug einzulegen und somit das Füll-/Verbindungselement in einer vorbestimmten Weise einzuspritzen.

Es ist ebenfalls von Vorteil, wenn vor dem axialen Zusammenführen des Rotormagneten und des Sensormagneten ein Abschirmungselement, insbesondere ein Rückschlussring, mit der Formschlusskontur des Füll-/Verbindungselements verbunden wird und in Wirkeingriff tritt.

Vorzugsweise ist das Verfahren durch folgende Schritte zusätzlich gekennzeichnet:
- Aufmagnetisieren des Sensormagneten und Ausbilden einer Aufnahme für die Formschlusskontur des Füll-/Verbindungselements in dem Sensormagneten derart, dass die Aufnahme auf den aufmagnetisierten Sensormagneten ausgerichtet ist; oder
- Ausbilden einer Aufnahme für die Formschlusskontur des Füll-/Verbindungselements in dem Sensormagneten, Ausrichten des Sensormagneten anhand der Aufnahme und Aufmagnetisieren des Sensormagneten derart, dass der aufmagnetisierte Sensormagnet auf die Aufnahme ausgerichtet ist.
Somit kann entweder das Füll-/Verbindungselement auf den Sensormagnet oder der Sensormagnet auf das Füll-/Verbindungselement angepasst werden. Dies verlieht dem Herstellungsverfahren Flexibilität und somit Kostenersparnis.

In einer weiteren vorteilhaften Ausführungsform wird der Sensormagnet vor dem axialen Zusammenführen auf die Formschlusskontur des Füll-/Verbindungselements ausgerichtet.

Das Fixieren weist vorteilhafterweise einen Umform- oder Verbindungsschritt der Formschlusskontur des Füll-/Verbindungselements auf, insbesondere eine Heißgasverstemmung, eine Warmumformung und/oder ein Ultraschall- oder Infrarotschweißen der Formschlusskontur. Diese Art der Fixierung bedarf keiner zusätzlichen Verbindungselemente und reduziert somit die Komplexität des Herstellungsverfahrens.

Erfindungsgemäß kann der hierin beschriebene Rotor auch in einer Drehstrommaschine verwendet werden, d.h. nicht nur in einem Elektromotor, wie beispielsweise zuvor beschrieben, sondern auch in einem elektrischen Generator zur Umwandlung von mechanischer Energie (Rotationsbewegung) in Drehstrom.

Die Erfindung wird nachfolgend anhand von bevorzugten Ausführungsbeispielen unter Bezugnahme auf die beigefügten schematischen Zeichnungen näher erläutert. Es wird darauf hingewiesen, dass trotz der unterschiedlichen Strukturen und Ausgestaltungen der nachfolgend beschriebenen Ausführungsbeispiele dieselben Bezugszeichen für gleich bezeichnete Komponenten und Bauteile der erfindungsgemäßen Rotoren verwendet werden.

Es zeigen:
- Fig. 1: eine perspektivische Ansicht auf einen Rotor gemäß eines erstes Ausführungsbeispiel der vorliegenden Erfindung;
- Fig. 2: eine weitere perspektivische Ansicht auf den Rotor aus Fig. 1;
- Fig. 3: eine perspektivische Ansicht auf einen Rotor gemäß eines zweiten Ausführungsbeispiel der vorliegenden Erfindung; und
- Fig. 4: eine weitere perspektivische Ansicht auf den Rotor aus Fig. 3.

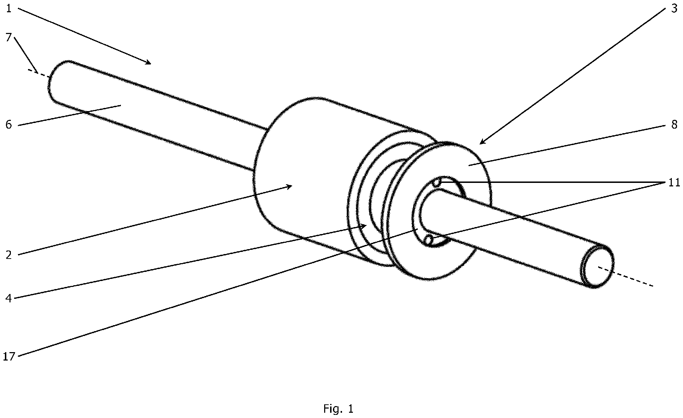

Fig. 1 zeigt eine perspektivische Ansicht auf einen Rotor 1 gemäß einem ersten Ausführungsbeispiel der vorliegenden Erfindung. Der Rotor 1 weist einen Rotormagneten 2 und einen Sensormagneten 3 auf, die mittels eines eingespritzten Füll-/Verbindungselements 4 fest miteinander verbunden sind. Der Rotormagnet 2 ist hohlzylindrisch und der Sensormagnet 3 ringförmig ausgebildet, wobei die Wellen-/Rotorachse 7 der innerhalb des Rotors 1 angeordnet Welle 6 im Wesentlichen die Symmetrieachse der zuvor genannten Magnete 2 und 3 bildet. Die Welle 6 ist stabförmig mit axial gleichbleibendem Durchmesser ausgeformt und dient der Übertragung des auf den Rotormagneten 2 ausgeübten Drehmoments durch ein von außen aufgeprägtes Magnetfeld eines Stators (nicht dargestellt), insbesondere ein durch Spulen erzeugtes Magnetfeld. In anderen Ausführungsformen ist auch denkbar, eine einfach oder mehrfach abgesetzte Welle zu verwenden. Das bedeutet bespielweise, dass die Welle mehrere Abschnitte mit unterschiedlichen Durchmesser aufweisen kann. Hierbei können die Durchmesser zur Mitte der Wellenlänge zunehmen und anschließend abnehmen.

Der Sensormagnet 3 ist axial neben dem Rotormagnet 2 angeordnet, wobei deren Außendurchmesser gleich groß sind. In anderen Ausführungsformen kann der Außendurchmesser des Sensormagneten vorzugsweise kleiner sein. Die beiden Magnete 2 und 3 sind koaxial, parallel und beabstandet zueinander angeordnet. Durch die Beabstandung wird eine gegenseitige Beeinflussung der durch die Magnete 2 und 3 erzeugten Magnetfelder reduziert.

Stattdessen bilden der Sensormagnet 3 und der Rotormagnet 2 an mindestens einem Berührungspunkt/-fläche (jeweils) einen Formschluss 11 aus, wodurch eine vorbestimmte Orientierung sowie Lage/Stellung zwischen den beiden Magneten 2 und 3 eingenommen und der Sensormagnet 3 verdrehsicher mit dem Rotormagneten 2 verbunden wird. Hierbei sind die beiden Magnete 2 und 3 im Wesentlichen parallel zueinander angeordnet. Die korrekte Anordnung der beiden Magnete 2 und 3 ist bei der Positionserfassung des Rotormagneten mittels des Sensormagneten hilfreich. Insofern sind die sich abwechselnden Magnetpole des Sensormagneten 3 in einer bestimmten Weise auf die abwechselnden Magnetpole des Rotormagneten 2 ausgerichtet bzw. zu diesen angeordnet. Dadurch ist eine genaue Bestimmung der Stellung sowie der Geschwindigkeit des Rotormagneten 2 über die Messung des Sensormagneten 3, z.B. mittels eines Hall-Sensors (nicht dargestellt), möglich; die ist lediglich durch die strukturelle Ausformung des Füll-/Verbindungselements 4 bedingt und benötigt keine zuvor durchgeführte Lagebestimmung und werkzeug-/prozesstechnische oder händische Ausrichtung der Magnete 2 und 3.

Der Sensormagnet 3 besteht aus einem ringförmigen Magnetelement 8 und einem innerhalb des Magnetelements 8 ausgebildeten Befestigungsring 17. Das Magnetelement 8, auch als "Sensorspur" bezeichnet, weist eine oder mehrere konzentrisch zueinander angeordnete und ringförmige Sensorspuren mit einer Vielzahl von abwechselnd gepolten Magnetpolen auf. Der Befestigungsring 17 bildet eine Verbindung zwischen dem Magnetelement 8 und der Welle 6 derart, dass die Welle 6 durch den Befestigungsring 17 führbar ist. Insbesondere weist der Befestigungsring 17 zwei Aufnahmen auf, die mit der Formschlusskontur des Füll-/Verbindungselement 4 zwei Formschlüsse 11 bilden.

Das Füllelement 4 wird aus in den Rotor 1 eingespritztem und anschließend ausgehärtetem Material, wie z.B. Kunststoff, gebildet und steht als einziges Teil des Rotors 1 in direkter Verbindung mit der Welle 6; diese kann in Form einer Presspassung der Welle 6 in das ausgehärtete Füllelement 4 oder in Form einer Umspritzung der Welle 6 durch des Füllelements 4 vorliegen. Des Weiteren ist das Füllelement 4 vollständig im restlichen Innenraum des Rotormagneten 2 eingespritzt und komplanar zu einer Seite des Rotormagneten 2 ausgebildet. Hierbei kann diese Seite des Rotormagneten 2 eine Formschlusskontur für einen Formschluss mit dem Füll-/Verbindungselement 4 aufweisen, um eine verdrehsichere Verbindung zwischen den genannten Komponenten zu bilden. Auf der gegenüberliegenden Seite, an der der Sensormagnet 3 angeordnet ist und anliegt, ist das Füllelement 4 teilweise komplanar zum Rotormagnet 2 ausgeformt.

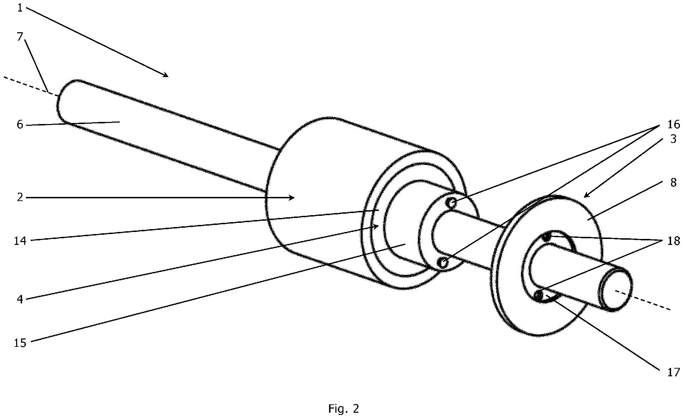

Fig. 2 zeigt eine weitere perspektivische Ansicht auf den Rotor 1 aus Fig. 1. In dieser Figur ist im Unterschied zu Fig. 1 der Sensormagnet 3 auf der Welle 6 angeordnet, aber noch nicht mit dem Füll-/Verbindungselement 4 verbunden. Der Befestigungsring 17 des Sensormagneten 3 weist zwei Aufnahmen 18 in Form von Löchern bzw. Bohrungen für die Formschlusskontur des Füll-/Verbindungselement 4 auf. Das Füll-/Verbindungselement 4 ist durch einen Befestigungszylinder 14 und einen mit dem Befestigungszylinder 14 verbundenen Abstandszylinder 15 gekennzeichnet. Der Befestigungszylinder 14 und der Abstandszylinder 15 sind koaxial zueinander angeordnet und weisen eine Bohrung für die Welle 6 auf. Der Befestigungszylinder 14 ist vollständig in dem Rotormagneten 2 und insbesondere komplanar zu dessen Seiten ausgebildet. Der Abstandszylinder 15 hat auf seiner dem Rotormagneten 2 weggerichteten Seitenebene zwei Formschlussstifte 16 als Formschlusskontur. Diese Stifte 16 sind in die Aufnahmen 18 einsetzbar und bilden, wie in Fig. 1 gezeigt, jeweils einen Formschluss 11. Zusätzlich kann der Sensormagnet 3 derart ausgebildet sein, dass der Befestigungsring 17 eine Vertiefung bildet, in die der Abstandszylinder 15 formschlüssig eingesetzt werden kann.

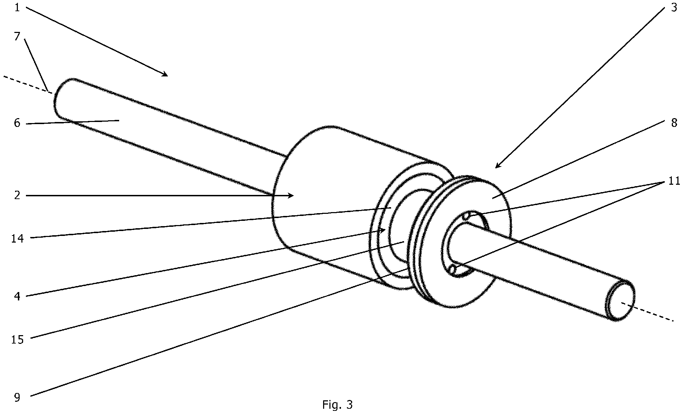

Fig. 3 zeigt eine perspektivische Ansicht auf einen Rotor 1 gemäß einem zweiten Ausführungsbeispiel der vorliegenden Erfindung. Im Gegensatz zum Rotor 1 aus Fig. 1 und 2 ist zusätzlich ein Abschirmungselement 9 in Form eines Rückschlussrings auf dem Abstandszylinder 15 angeordnet. Auf dem Abschirmungselement 9 wiederum ist der Sensormagnet 3 ausgebildet und ist mittels zweier Formschlüsse 11 mit dem Füll-/Verbindungselement 4 verbunden bzw. befestigt. Ansonsten sind alle Komponenten des Rotors 1 aus Fig. 3 identisch zu denen des Rotors 1 aus Fig. 1; bis auf die nachfolgend beschriebenen Befestigungsstifte 16.

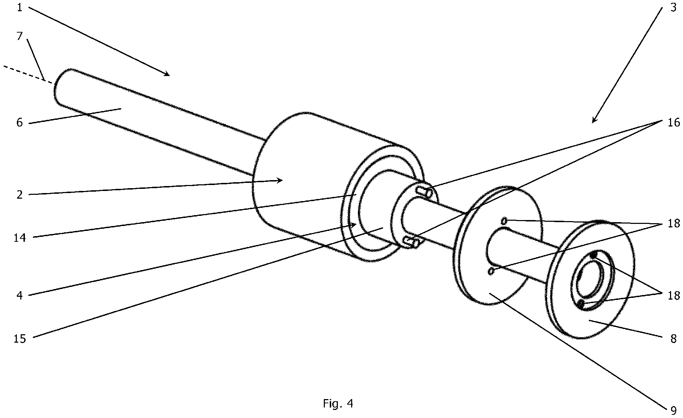

Fig. 4 zeigt eine weitere perspektivische Ansicht auf den Rotor 1 aus Fig. 3. Hierbei erkennt man im Detail das Abschirmungselement 9, das aus einer ringförmigen, ebenen Scheibe gebildet wird und, wie der Befestigungsring 17, zwei Aufnahmen 18 für die Befestigungsstifte 16 aufweist. Im Gegensatz zum Rotor 1 aus Fig. 1 und 2 sind die Befestigungsstifte 16 in diesem Fall länger, um durch das Abschirmungselement 9 und den Sensormagnet 3, insbesondere durch deren Aufnahmen 18, durchführbar und zur Fixierung verformbar zu sein.

### Bezugszeichenliste

- 1: Rotor
- 2: Rotormagnet
- 3: Sensormagnet
- 4: Füll-/Verbindungselement
- 5: (frei)
- 6: Welle
- 7: Wellen-/Rotorachse
- 8: Magnetelement/spur
- 9: Abschirmungselement bzw. Rückschlussring
- 10: (frei)
- 11: Formschluss (zwischen Verbindungselement und Sensormagnet)
- 12: (frei)
- 13: (frei)
- 14: Befestigungszylinder (für den Rotormagnet)
- 15: Abstandszylinder (für den Sensormagnet)
- 16: Formschlussstifte/-nasen (des Füll-/Verbindungselement)
- 17: Befestigungsring
- 18: Aufnahme (für Formschlusselement des Verbindungselements)

## Patentansprüche

1. Rotor (1) für einen bürstenlosen Gleichstrommotor, mit einem Rotormagneten (2) und einem Sensormagneten (3) für die Positionserfassung des Rotormagneten (2),
**gekennzeichnet durch**
ein eingespritztes Füll-/Verbindungselement (4), das den Rotormagneten (2) und den Sensormagneten (3) miteinander fest verbindet, wobei das Füll-/Verbindungselement (4) eine Formschlusskontur zum orientierten und verdrehsicheren Verbinden mit dem Sensormagneten (3) aufweist.

2. Rotor (1) nach Anspruch 1,
**dadurch gekennzeichnet, dass**
die Formschlusskontur des Füll-/Verbindungselements (4) auf den Rotormagneten ausgerichtet ist.

3. Rotor (1) nach Anspruch 1 oder 2,
**dadurch gekennzeichnet, dass**
der Rotor (1) mit einer Welle (6) fest verbunden und/oder geeignet ist, eine Welle (6) entlang einer Achse (7) des Rotors (1) aufzunehmen.

4. Rotor (1) nach einem der Ansprüche 1 bis 3,
**dadurch gekennzeichnet, dass**
zwischen Rotormagnet (2) und Sensormagnet (3) ein Abschirmungselement (9), insbesondere ein Rückschlussring, zur Verstärkung eines Sensormagnetfelds des Sensormagneten (3) und zur Abschirmung des Sensormagnetfelds von einem Rotormagnetfeld des Rotormagneten (2) angeordnet ist.

5. Rotor (1) nach einem der Ansprüche 1 bis 4,
**dadurch gekennzeichnet, dass**
die Formschlusskontur des Füll-/Verbindungselements (4) mindestens eine Nase (16) aufweist, wobei der Sensormagnet (3) eine mit der Nase verbundene Aufnahme (18) aufweist.

6. Rotor (1) nach einem der Ansprüche 1 bis 5,
**dadurch gekennzeichnet, dass**
das Füll-/Verbindungselement (4) zumindest teilweise oder vollständig unter oder um den Rotormagneten (2) gespritzt oder ausgebildet ist.

7. Verfahren zur Herstellung eines Rotors für einen bürstenlosen Gleichstrommotor, insbesondere eines Rotors (1) nach einem der vorhergehenden Ansprüche, aufweisend die folgenden Schritte:
- Herstellen oder Bereitstellen eines Rotormagneten (2) und eines Sensormagneten (3);
- zumindest teilweises Unter- oder Umspritzen des Rotormagneten (2) mit einem Füll- oder Verbindungswerkstoff zur Bildung eines eingespritzten Füll-/Verbindungselements (4), wobei das Füll-/ Verbindungselement (4) eine Formschlusskontur zum orientierten und verdrehsicheren Verbinden mit dem Sensormagneten (3) aufweist;
- Axiales Zusammenführen des Rotormagneten (2) und des Sensormagneten (3), wobei der Sensormagnet (3) mit der Formschlusskontur des Füll-/Verbindungselements (4) verbunden wird und in Wirkeingriff tritt;
- Fixieren des Sensormagneten (3) mit der Formschlusskontur des Füll-/Verbindungselements (4).

8. Verfahren nach Anspruch 7,
**dadurch gekennzeichnet, dass,**
wenn der Rotormagnet (2) zum Unter- oder Umspritzungsschritt aufmagnetisiert ist, der Unter- oder Umspritzungsschritt derart ausgeführt wird, dass die Formschlusskontur des Füll-/Verbindungselements (4) auf den Rotormagnet (2) ausgerichtet ist.

9. Verfahren nach Anspruch 7 oder 8,
**dadurch gekennzeichnet, dass**
vor dem axialen Zusammenführen des Rotormagneten (2) und des Sensormagneten (3) ein Abschirmungselement (9), insbesondere ein Rückschlussring, mit der Formschlusskontur des Füll-/Verbindungselements (4) verbunden wird und in Wirkeingriff tritt.

10. Verfahren nach einem der Ansprüche 7 bis 9,
**gekennzeichnet durch**
Aufmagnetisieren des Sensormagneten (3) und Ausbilden einer Aufnahme für die Formschlusskontur des Füll-/Verbindungselements (4) in dem Sensormagneten (3) derart, dass die Aufnahme auf den aufmagnetisierten Sensormagneten (3) ausgerichtet ist; oder
Ausbilden einer Aufnahme für die Formschlusskontur des Füll-/Verbindungselements (4) in dem Sensormagneten (3), Ausrichten des Sensormagneten (3) anhand der Aufnahme und Aufmagnetisieren des Sensormagneten (3) derart, dass der aufmagnetisierte Sensormagnet (3) auf die Aufnahme ausgerichtet ist.

11. Verfahren nach einem der Ansprüche 7 bis 10,
**dadurch gekennzeichnet, dass**
der Sensormagnet (3) vor dem axialen Zusammenführen auf die Formschlusskontur des Füll-/Verbindungselements (4) ausgerichtet wird.

12. Verfahren nach einem der Ansprüche 7 bis 11,
**dadurch gekennzeichnet, dass**
das Fixieren einen Umform- oder Verbindungsschritt der Formschlusskontur des Füll-/Verbindungselements (4) aufweist, insbesondere eine Heißgasverstemmung, eine Warmumformung und/oder ein Ultraschall- oder Infrarotschweißen der Formschlusskontur.
